# EUROPEAN PATENT SPECIFICATION

(11) **EP 4 127 499 B1**
(45) Date of publication and mention of the grant of the patent: **20.12.2023**
(21) Application number: 21717019.0
(22) Date of filing: 01.04.2021
(51) Int. Cl.: F16C 33/58, F16C 35/063

(54) **BEARING UNIT WITH CONCENTRIC CLAMPING COLLAR**
LAGEREINHEIT MIT KONZENTRISCHEM KLEMMRING
UNITÉ DE PALIER AVEC COLLIER DE SERRAGE CONCENTRIQUE

(30) Priority: 03.04.2020 IT 202000007048
(43) Date of publication of application: 08.02.2023
(73) Proprietor: Aktiebolaget SKF, 415 50 Göteborg (SE)
(72) Inventor: BARACCA, Fausto, 54100 Massa (MS) (IT); BERTOLINI, Andrea A, 54033 Carrara (IT)
(74) Representative: Kohl, Thomas
(86) International application number: PCT/EP2021/058728
(87) International publication number: WO 2021/198475

(56) References cited:
- GB-A- 696 303
- US-A- 3 276 828

## Description

### Technical field of the invention

The present invention relates to a bearing unit, provided with a collar for clamping the radially inner ring on a rotating shaft. Such a bearing unit is suitable for applications in the manufacturing industry and in particular for the agricultural industry since it is simple and inexpensive to produce.

In particular, the bearing unit according to the present invention is provided with rolling elements and is provided with an optimized clamping system which involves the use of a concentric collar which is able to grip and clamp onto the shaft a plurality of circular sector segments which are spaced by grooves in the radially inner ring, together with an innovative heat treatment for the radially inner ring.

### Prior art

Bearing units provided with rolling elements and systems for clamping the said unit on a rotating shaft are known.

The bearing units are used to allow the relative movement of a component or assembly with respect to another component or assembly. The bearing unit generally has a first component, for example a radially inner ring, which is fixed to a first component, for example a rotating shaft, and a second component, for example a radially outer ring, which is fixed to a second component, for example a stationary housing. Typically, as per the examples mentioned above, the radially inner ring is rotatable, while the radially outer ring is stationary, but in many applications the outer element may rotate and the inner element may be stationary. In any case, in the rolling bearing units, the rotation of one ring with respect to the other ring is allowed by a plurality of rolling elements which are positioned between the cylindrical surface of a component and the cylindrical surface of the second component, normally called raceways. The rolling elements may be balls, cylindrical or tapered rollers, needle rollers or similar rolling elements.

Also known are bearing units provided with a clamping collar for mounting on a rotating shaft. This solution is simpler and more low-cost compared to that which involves interference force-fitting of the radially inner ring on the rotating shaft. The use of clamping collars, however, results in drawbacks associated with the noise which is generated and the excessive vibrations which may damage the shaft on which they are installed. In an attempt to overcome these problems, a known solution consists in shaping the end portion of the radially inner ring with a plurality of circular sector segments spaced by grooves, namely a series of "grooved fingers" on which the clamping collar engages. The greater flexibility of these circular sector segments facilitates the flexing of the said segments against the shaft when the clamping collar is installed and tightened.

This solution has not proved to be effective since the thickness of the circular sector segments could not be reduced sufficiently to ensure the necessary flexibility because there would be the risk of weakening excessively the end portion of the radially inner ring and causing it to break as a result of over-tightening.

Furthermore, the radially inner ring must be adequately hardened, normally using a case-hardening heat treatment, in order to ensure the correct operation of the bearing unit. In particular, the hertzian contact between the rings of the bearing unit and the rolling elements (balls, rollers, etc.) requires contact surfaces which are sufficiently hardened so as to avoid the deformations and consequent vibrations and noise. The heat treatment, however, has as a consequence precisely that of reducing the flexibility of the circular sector segments in contact with the clamping collar, with the result that the solutions according to the prior art are not very effective.

US 3 276 828 A shows a bearing unit according to the preamble of claim 1.

There therefore exists the need to define a bearing unit provided with a clamping collar such that the clamping action is reliable from the point of view of mechanical strength, ensures the concentricity of the shaft and the radially inner ring, does not generate excessive noise and/or vibrations and is sustainable in economic terms.

### Summary of the invention

The object of the present invention is to provide a bearing unit comprising a clamping collar which has characteristics ensuring a more efficient clamping action and which is therefore not subject to the aforementioned drawbacks.

According to the present invention, the radially inner ring is provided in an end portion, i.e. that which comes into contact with the clamping collar, with a plurality of circular sector segments which are spaced by grooves and the collar used in this solution acts so as to make concentric the radially inner ring with respect to a shaft on which it must be stably fixed.

More particularly, according to the present invention, the radially inner ring is not case-hardened, but is subject to a localized induction-hardening heat treatment. In this way the necessary hardness around the surfaces of the radially inner ring which are in contact with the rolling elements is ensured, while the terminal end of the radially inner ring, which comprises the circular sector segments, remains sufficiently pliable, thus improving the flexibility of the circular sector segments intended to be gripped by the concentric clamping collar.

Therefore, according to the present invention, a bearing unit provided with a concentric clamping collar and comprising a radially inner ring having the characteristic features described in the attached independent claim is provided.

### Brief description of the drawings

The invention will now be described with reference to the attached drawings which illustrate a number of non-limiting examples of embodiments of the housing element, in which:
- Figure 1 shows a cross-sectional view of a bearing unit provided with a concentric clamping collar, according to an embodiment of the present invention;
- Figure 2 shows an axonometric view of the bearing unit provided with a collar, as shown in Figure 1, in which the means for tightening the collar around the radially inner ring are visible;
- Figure 3 shows a bearing unit similar to that of Figure 1, in which the portion of the radially inner ring which is subjected to an induction-hardening heat treatment is visible;

- Figure 4 shows a first detail of Figure 3 which shows more clearly the different zones of the radially inner ring subjected to the induction-hardening heat treatment; and
- Figure 5 shows a second detail of Figure 3 in which the end zone of the radially inner ring not subjected to the induction-hardening heat treatment is more clearly visible.

### Detailed description

With reference now to the aforementioned figures, below an embodiment of a bearing unit according to the present invention is described purely by way of example.

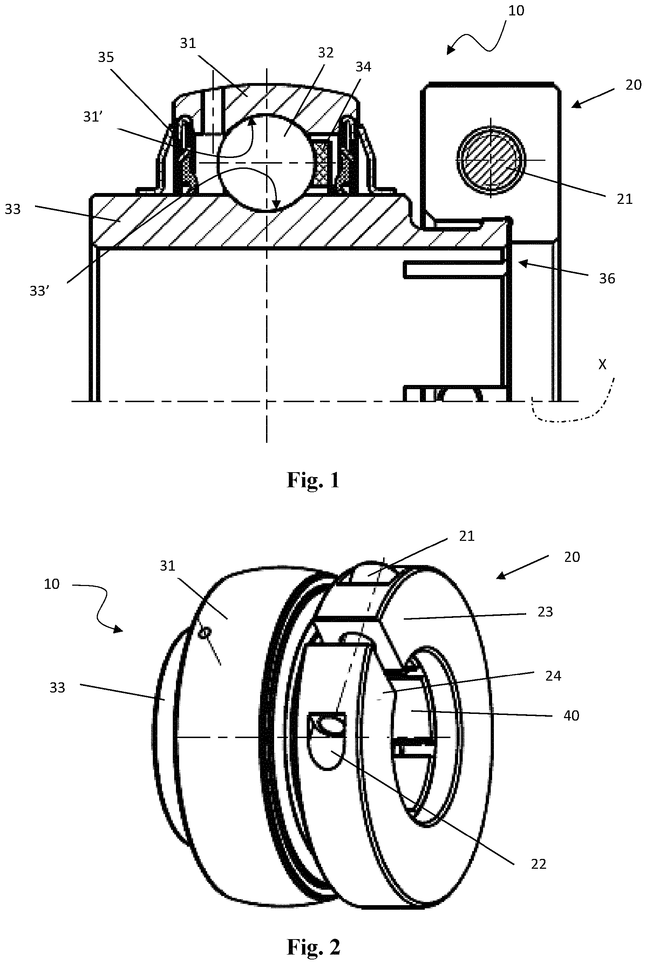

With particular reference to Figure 1, the bearing unit 10 for applications in the agricultural sector and/or in the manufacturing industry - for example textile, mining, automobile and food industry - may be arranged, for example, between a rotating shaft and a housing element, not forming part of the present invention, and comprises:
- a stationary radially outer ring 31;
- a radially inner ring 33, which is rotatable about a central rotation axis X of the bearing unit 10;
- at least one row of rolling elements 32, in this example balls, interposed between the radially outer ring 31 and the radially inner ring 33;
- a cage 34 for containing the rolling bodies so as to keep the rolling elements of the row of rolling bodies 32 in position;
- a concentric collar 20 for clamping the radially inner ring onto the shaft.

In the whole of the present description and in the claims, the terms and the expressions indicating positions and orientations such as "radial" and "axial" are understood as referring to the central rotation axis X of the bearing unit 30.

The radially outer ring 31 is provided with a radially outer raceway 31', while the radially inner ring 33 is provided with at least one radially inner raceway 33' for allowing rolling of the row of rolling elements 32 interposed between the radially outer ring 31 and the radially inner ring 33. For the sake of simpler graphical illustration the reference number 32 will be attributed both to the individual balls and to the row of balls. Again for the sake of simplicity, the term "ball" may be used by way of example in the present description and in the attached drawings instead of the more generic term "rolling element" (and likewise the same reference numbers will be used). Some examples of embodiment and the associated drawings may envisage the use of rolling elements other than balls (for example rollers) without thereby departing from the scope of the present invention.

The bearing unit 10 is also provided with sealing means 35 for sealing off the bearing unit from the external environment. Below the sealing means 35 may be indicated also more simply as seals 35, obviously understood as referring to the same component.

As mentioned, the concentric clamping collar 20 has the function of clamping an end portion 36 of the radially inner ring 33 on a rotating shaft.

With reference to Figure 2, the clamping of the collar 20 around circular sector segments 40 of the end portion 36 of the radially inner ring 33 is performed using known methods, i.e. using screw means 21, for example a cylindrical head screw with a hexagonal socket (Torx head screw). The collar 20 is allows provided with a raised groove 22. The collar, which is installed over the radially inner ring 33 and in particular over the circular sector segments 40, locks the radially inner ring 33 of the bearing unit 10 onto the shaft in a concentric manner, without causing damage and/or burring and exerts a 360 degree clamping force on the shaft with a minimum displacement of its arms 23, 24 so as to reduce the vibrations to a minimum.

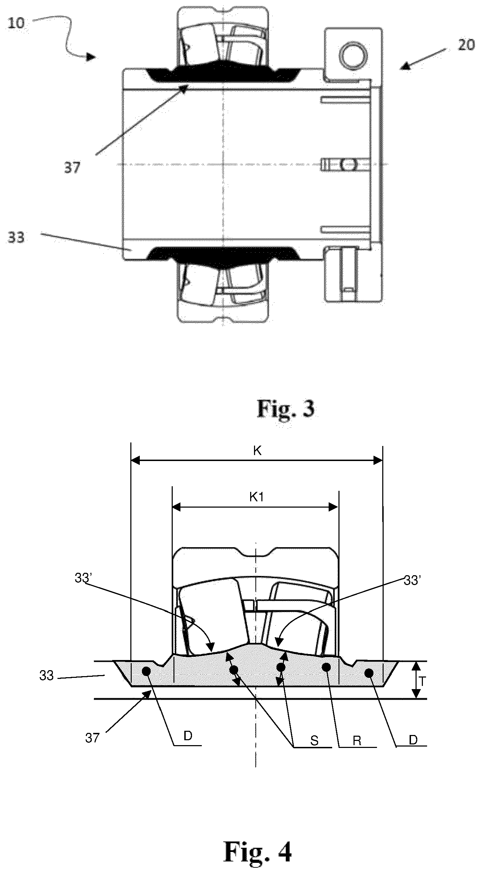

With reference to Figure 3 which shows a bearing unit 10 similar to that shown in Figure 1, the sole difference consisting in the rolling elements 32 (in this figure there are two rows of rollers, while in bearing unit of Figure 1 there is a single row of balls), the portion 37 of the radially inner ring 33 which is subjected to induction-hardening heat treatment is visible.

The particular feature of the present invention consists in the fact of applying to the radially inner ring 33 also a different heat treatment, namely induction-hardening instead of case-hardening. This results in a reduction in the costs since the induction-hardening process is more economical than case-hardening and allows the inner ring close to the clamping collar 20 to be completely pliable.

Finally, the heat treatment of the known type is a case-hardening over all the inner surfaces of the radially inner ring 33. Generally, case-hardening may be solid or gaseous and since the radially inner ring 33 cannot be divided into two parts, all the surfaces are case-hardened, including those close to the clamping collar 20.

With the induction-hardening process, instead, it is possible to harden only specific surfaces of the inner ring, in particular those surrounding the raceways 33'. This different heat treatment may result in a significant reduction in the costs since the cost of the heat treatment is proportional to the surface area of the heat-treated material and the quantity of material treated with the induction-hardening process is less than that of the case-hardening process.

Advantageously, the material of the radially inner ring, instead of being case-hardening steel, for example AISI 8620 H (21NiCrMo2), could be a hardening steel, for example a 100Cr6 steel which is also less costly.

In order for the induction-hardening treatment to be effective in achieving both goals, namely on the one hand providing the necessary surface hardness around the raceways 33' of the radially inner ring 33 and on the other hand leaving the material pliable in the end portion 36 of the radially inner ring 33, it is necessary for the heat treatment to be performed specifying certain geometric parameters and the hardness in the different zones of the radially inner ring 33.

More particularly, with reference to Figure 4, which is a first detail of Figure 3, in which the different zones of the radially inner ring 33 which are subjected to the induction-hardening heat treatment are shown more clearly, it can be noted that the portion 37 of the radially inner ring 33 subjected to induction-hardening heat treatment may be further subdivided into a first central zone R and second, more peripheral, zones D situated on opposite sides of the central zone R.

In order to optimize the induction-hardening heat treatment, the axial length K1 of the first zone R must embrace entirely the axial length of the raceways 33' of the radially inner ring 33, namely the axial length K1 will be greater than or equal to the axial length of the raceway(s) 33'. Moreover, over the whole axial length K1, the hardening depth of the zone R, namely the thickness of the material which must ensure high hardness values, will be equal to at least 10% of the thickness T of the radially inner ring 33 and the portion 37 does not extend radially through the full thickness T as shown in figures 3 and 4.

Moreover, if K defines the axial length of the entire portion 37 of the radially inner ring 33 on which the heat treatment is carried out, the axial length of each of the second zones D, which may be calculated as (K-K1)/2, must be not less than 2 mm.

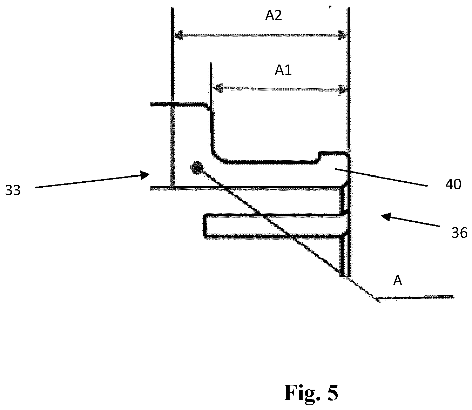

With reference to Figure 5, which shows a second detail of Figure 3 in which the end portion 36 of the radially inner ring 33 not subjected to the induction-hardening heat treatment is more clearly visible, it is possible to define a third zone A, included in the end portion 36 of the radially inner ring 33 and to be understood as the minimum zone not to undergo the induction-hardening heat treatment. If A1 defines the axial length of the circular sector segments 40, the axial length A2 of the third zone A must be not less than A1 + 0.5 mm.

Finally and according to a preferred embodiment, the zones R, D and A, defined above, must have hardness values, for example measured on the HRC scale, as shown in the table below.

**Table 1**

| Zone | Hardness (HRC) | |
|---|---|---|
| | Min | Max |
| R | 56 | 64 |
| A | - | 45 |
| D (on the surface) | 50 | 64 |

It can be noted how the first zone R and the second zones D, which are subjected to the induction-hardening heat treatment may reach very high hardness values, up to 64 HRC, and in any case the zone R must have a hardness value of not less than 56 HRC. On the other hand, the third zone A, which is not subjected to the heat treatment, must not exceed the hardness value of 45 HRC. Therefore the circular sector segments 40, which are included in the third zone A, must be made using material which is entirely pliable and therefore will have optimum flexibility in response to the clamping action of the concentric collar 20.

Basically, with this novel induction-hardening heat treatment it is possible to achieve, compared to the prior art, an improved performance of the clamping system in terms of the power which can be transmitted and the vibration levels. The circular sector segments are more flexible and as a result, for the same tightening torque of the screws which act on the collar, the closing action of the circular sector segments may be increased.

From a functional point of view, with the proposed invention it is possible to obtain a "concentric" solution with all the resultant advantages: coincidence between the shaft and the axis of the bearing unit; the speed and the nominal limit loads do not depend on the tolerance of the shaft; a constant or alternate direction of rotation may be used; the lower vibration level does not damage the shaft in any way; reduction of the corrosion due to friction; easy and fast assembly.

Moreover, with the solution shown it is possible to achieve savings in the production costs and in particular in the costs relating to the induction-hardening heat treatment, the surface area which must undergo hardening being limited to the raceways alone where the rolling elements are in contact with the radially inner ring.

In addition to the embodiments of the invention, as described above, it is to be understood that numerous further variants exist. It must also be understood that said embodiments are only examples and do not limit either the scope of the invention, nor its applications, nor its possible configurations. On the contrary, although the description provided above enables the person skilled in the art to implement the present invention at least in one of its examples of configuration, it must be understood that numerous variations of the components described are feasible, without thereby departing from the scope of the invention, as defined in the accompanying claims.

## Claims

1. Bearing unit (10) comprising:
- a stationary radially outer ring (31),
- a radially inner ring (33), which is rotatable around a central rotation axis (X) of the bearing unit (10) and is provided with at least one raceway (33') and, in an end portion thereof (36), with at least two circular sector segments (40),
- at least one row of rolling elements (32) interposed between the radially outer ring (31) and the radially inner ring (33),
- a concentric collar (20) for clamping the radially inner ring (33) on a rotating shaft,
wherein an induction-hardening heat treatment is applied to a portion (37) of the radially inner ring (33) comprising the at least one raceway (33'),
the portion (37) of the radially inner ring (33) comprises a first central zone (R) and second peripheral zones (D) which are situated on opposite sides of the first zone (R) and to which the induction-hardening heat treatment is applied,
**characterised in that**
the hardening depth of the first zone (R) over an entire axial length (K1) of the first zone (R) is greater than or equal to 10% of a thickness (T) of the radially inner ring (33) and
the portion (37) does not extend radially through the full thickness (T).

2. Bearing unit (10) according to Claim 1, wherein the axial length (K1) of the first zone (R) is greater than or equal to an axial length of the at least one raceway (33') of the radially inner ring (33).

3. Bearing unit (10) according to Claim 1, wherein the axial length of each of the second zones (D), which are peripheral with respect to the central zone (R), is greater than or equal to 2 mm.

4. Bearing unit (10) according to one of the preceding claims, wherein an end portion (36) of the radially inner ring (33) comprises a third zone (A) to which the induction-hardening heat treatment is not applied.

5. Bearing unit (10) according to Claim 4, wherein the third zone (A) has an axial length (A2) not less than the axial length (A1) of the circular sector segments (40) plus 0.5 mm.

6. Bearing unit (10) according to Claim 1, wherein the first zone (R) has a hardness value of not less than 56 HRC.

7. Bearing unit (10) according to Claim 4, wherein the third zone (A) has a hardness value not exceeding 45 HRC.

## Patentansprüche

1. Lagereinheit (10), umfassend:
- einen stationären radial äußeren Ring (31),
- einen radial inneren Ring (33), der um eine mittlere Rotationsachse (X) der Lagereinheit (10) drehbar und mit mindestens einer Laufbahn (33') und in einem Endabschnitt (36) davon mit mindestens zwei Kreissektorsegmenten (40) versehen ist,
- mindestens einer Reihe von Wälzkörpern (32), die zwischen dem radial äußeren Ring (31) und dem radial inneren Ring (33) angeordnet sind,
- einen konzentrischen Bund (20) zum Klemmen des radial inneren Rings (33) auf eine Drehwelle,
wobei ein Abschnitt (37) des radial inneren Rings (33), der die mindestens eine Laufbahn (33') umfasst, mit einer Induktionshärtungswärmebehandlung beaufschlagt wird,
wobei der Abschnitt (37) des radial inneren Rings (33) eine erste mittlere Zone (R) und zweite Umfangszonen (D) umfasst, die an gegenüberliegenden Seiten der ersten Zone (R) angeordnet sind und die mit der Induktionshärtungswärmebehandlung beaufschlagt werden,
**dadurch gekennzeichnet, dass**
die Härtungstiefe der ersten Zone (R) über eine gesamte axiale Länge (K1) der ersten Zone (R) größer oder gleich 10% einer Dicke (T) des radial inneren Rings (33) ist und sich der Abschnitt (37) nicht radial durch die vollständige Dicke (T) erstreckt.

2. Lagereinheit (10) nach Anspruch 1, wobei die axiale Länge (K1) der ersten Zone (R) größer oder gleich einer axialen Länge der mindestens einen Laufbahn (33') des radial inneren Rings (33) ist.

3. Lagereinheit (10) nach Anspruch 1, wobei die axiale Länge jeder der zweiten Zonen (D), die bezüglich der mittleren Zone (R) am Umfang liegen, größer oder gleich 2 mm ist.

4. Lagereinheit (10) nach einem der vorhergehenden Ansprüche, wobei ein Endabschnitt (36) des radial inneren Rings (33) eine dritte Zone (A) umfasst, die nicht mit der Induktionshärtungswärmebehandlung beaufschlagt wird.

5. Lagereinheit (10) nach Anspruch 4, wobei die dritte Zone (A) eine axiale Länge (A2) hat, die nicht kleiner als die axiale Länge (A1) der Kreissektorsegmente (40) plus 0,5 mm ist.

6. Lagereinheit (10) nach Anspruch 1, wobei die erste Zone (R) einen Härtewert von nicht weniger als 56 HRC hat.

7. Lagereinheit (10) nach Anspruch 4, wobei die dritte Zone (A) einen Härtewert von nicht mehr als 45 HRC hat.

## Revendications

1. Unité de palier (10) comprenant :
- une bague radialement externe (31) stationnaire,
- une bague radialement interne (33), qui peut tourner autour d'un axe de rotation central (X) de l'unité de palier (10) et est dotée d'au moins un chemin de roulement (33') et, dans une partie d'extrémité (36) de celle-ci, d'au moins deux segments de secteur circulaire (40),
- au moins une rangée d'éléments de roulement (32) interposés entre la bague radialement externe (31) et la bague radialement interne (33),
- un collier concentrique (20) pour serrer la bague radialement interne (33) sur un arbre de rotation,
un traitement thermique de trempe par induction étant appliqué à une partie (37) de la bague radialement interne (33) comprenant l'au moins un chemin de roulement (33'),
la partie (37) de la bague radialement interne (33) comprenant une première zone centrale (R) et des deuxièmes zones périphériques (D) qui sont situées sur des côtés opposés de la première zone (R) et auxquelles le traitement thermique de trempe par induction est appliqué,
**caractérisée en ce que** la profondeur de trempe de la première zone (R) sur une longueur axiale (K1) totale de la première zone (R) est supérieure ou égale à 10 % d'une épaisseur (T) de la bague radialement interne (33) et la partie (37) ne s'étend pas radialement sur toute l'épaisseur (T).

2. Unité de palier (10) selon la revendication 1, la longueur axiale (K1) de la première zone (R) étant supérieure ou égale à une longueur axiale de l'au moins un chemin de roulement (33') de la bague radialement interne (33).

3. Unité de palier (10) selon la revendication 1, la longueur axiale de chacune des deuxièmes zones (D), qui sont périphériques par rapport à la zone centrale (R), étant supérieure ou égale à 2 mm.

4. Unité de palier (10) selon l'une des revendications précédentes, une partie d'extrémité (36) de la bague radialement interne (33) comprenant une troisième zone (A) à laquelle le traitement thermique de trempe par induction n'est pas appliqué.

5. Unité de palier (10) selon la revendication 4, la troisième zone (A) ayant une longueur axiale (A2) qui n'est pas inférieure à la longueur axiale (A1) des segments de secteur circulaire (40) plus 0,5 mm.

6. Unité de palier (10) selon la revendication 1, la première zone (R) ayant une valeur de dureté non inférieure à 56 HRC.

7. Unité de palier (10) selon la revendication 4, la troisième zone (A) ayant une valeur de dureté n'excédant pas 45 HRC.
